# EUROPÄISCHE PATENTSCHRIFT

(11) **EP 0 627 289 B1**
(45) Veröffentlichungstag und Bekanntmachung des Hinweises auf die Patenterteilung: **22.10.1997**
(21) Anmeldenummer: 93119326.2
(22) Anmeldetag: 01.12.1993
(51) Int. Cl.: B29C 45/07

(54) **Spritzgiesseinheit für eine Kunststoff-Spritzgiessmaschine**
Injection unit for a plastics injection moulding machine
Unité d'injection pour machine d'injection de matières plastiques

(30) Priorität: 29.05.1993 DE 4317998
(43) Veröffentlichungstag der Anmeldung: 07.12.1994
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- EP-A- 0 188 622
- DE-A- 2 719 067
- DE-A- 3 735 419

## Beschreibung

Die Erfindung betrifft eine Spritzgießeinheit für eine Kunststoff-Spritzgießmaschine nach dem Oberbegriff des Anspruchs 1.

Eine derartige Spritzgießeinheit ist aus der EP-A 328 671 bekannt. Elektromechanische Spindelantriebe werden für die Axialverschiebung der Schnecke und auch für das Anlegen der Düse an die Spritzgießform vorgesehen, jedoch erfolgt nur die Krafteinleitung für die Axialbewegung der Schnecke symmetrisch zur Spritzachse. Die Verschiebung der Spritzgießeinheit erfolgt hingegen asymmetrisch zur Spritzachse, so daß beim Anlegen Verspannungen auftreten können. Da die Antriebseinheit für die Bewegung der Spritzgießeinheit am Maschinenfuß widergelagert ist, ist ein großer Montageaufwand erforderlich, um die Spritzgießeinheit in eine Stellung zu überführen, in der sie in die Trennebene einspritzen kann, oder in der sie dem Linearanguß zugänglich ist.

Aus der EP-A 0 427 866 ist auch eine Spritzgießeinheit bekannt, bei der Kugelrollspindeln an einer stationären Platte so gelagert sind, daß eine zweite Platte bei Rotation der Spindeln axial verschoben wird. Mit dieser zweiten Platte ist dabei die Förderschnecke verbunden, so daß sich bei der Axialbewegung die axiale Schneckenbewegung ergibt. Eine Antriebseinheit für eine Bewegung der gesamten Spritzgießeinheit gehört nach dem dortigen Verständnis nicht zur Spritzgießeinheit und kann insofern nur äußerlich an der Spritzgießeinheit angreifen. Die Anlagekräfte für die Düse greifen außerhalb der Spritzachse an und es sind gesonderte Führungen für die Bewegung der Spritzgießeinheit erforderlich.

Aus dem Prospekt Fanuc Autoshot T series, Model 50D/75D/100D/150D/225D/300D, Seite 8 ist eine Spritzgießeinheit bekannt, bei der zum Einspritzen über Zahnriemen angetriebene Spindelantriebe vorhanden sind. Als Führungselemente für die Spritzgießeinheit und für die Verschiebung der Einspritzbrücke werden jedoch gesonderte außen liegende Führungen vorgesehen. Im Bereich der hydraulisch angetriebenen Spritzgießmaschinen ist aus DE-GM 70 46 626 bekannt, symmetrisch zur Spritzachse angeordnete Antriebseinheit und Einspritzzeinheit ineinander zu schachteln. Dies konnte aber offensichtlich keine Anregung für den Bereich der elektromechanischen Antriebe oder der Hybridmaschinen geben, bei denen eine Einheit elektromechanisch und eine Einheit hydraulisch angetrieben sind.

Zur Erzielung eines momentenfreien Düsenanlagepunktes ist es aus der DE-A 37 35 419 bekannt, bei einer rein hydraulisch wirkenden Spritzgießeinheit die Einspritzeinheiten als auch die Antriebseinheiten in symmetrisch zur Spritzachse angeordneten Bohrungen des Trägerblockes anzuordnen. Da die Einheiten insofern parallel zueinander angeordnet sind, ergibt sich ein kompakter Aufbau. Beim Versuch, die dortigen hydraulischen Antriebseinheiten durch elektromechanische Antriebseinheiten zu ersetzen, tritt jedoch aufgrund des Spiels zwischen Mutter und Spindel der elektromechanischen Antriebe ein Verlust an Präzision ein, der zumindest auf Dauer einen momentenfreien Düsenanlagepunkt nicht mehr ermöglicht. Ein bloßer Nachbau der dort vorgeschlagenen Spritzgießeinheit unter Einsatz elektromechanischer Antriebe ist daher nicht möglich.

Ausgehend von diesem Stand der Technik liegt der Erfindung die Aufgabe zugrunde, eine Spritzgießeinheit der eingangs genannten Gattung derart weiterzubilden, daß konstruktiv einfach ein momentenfreier Düsenanlagepunkt und eine kompakte Spritzgießeinheit zu verwirklichen ist.

Diese Aufgabe wird durch die Merkmale des Anspruchs 1 gelöst.

Sowohl Antriebseinheit als auch Einspritzeinheit greifen symmetrisch zur Spritzachse an, so daß Verspannungen und Ungenauigkeiten beim Anlegen der Düse vermieden werden. Die Antriebseinheit ist in die Spritzgießeinheit integriert, so daß ein Umsetzen der Spritzgießeinheit für ein Einspritzen in die Trennebene oder ein seitliches Verschieben der Spritzgießeinheit für ein Einspritzen im Linearanguß durchführbar ist. Die Antriebseinheit ist entweder mechanisch oder hydraulisch betätigt, während die Einspritzeinheit mechanisch betätigt ist. Dadurch, daß die Enden der Führungssäulen an einer beliebigen Stelle der Kunststoff-Spritzgießmaschine widergelagert sind, ist die Spritzgießeinheit unabhängig vom Maschinenrahmen. Zur Erhöhung der Präzision werden Antriebseinheit und Einspritzeinheit ineinander geschachtelt, wobei die Einspritzeinheit an Führungselementen in der Spritzgießeinheit geführt ist. Dies führt zu einer kurzen Bauweise und der Einsatz einer Hohlspindel beseitigt die den Spindelantrieben zugewiesenen Nachteile, da der Spindelantrieb für die Schneckenbewegung durch die Hohlspindelausführung einen großen Durchmesser erhält, verbunden mit einer hohen dynamischen Tragzahl, die die Lebensdauer des Spindelantriebs erhöht. Der große Durchmesser dieser "Doppelspindel" versteift aber auch die Antriebseinheit, so daß die Übertragung der auftretenden Kräfte gesichert ist. Diese Ausgestaltung hat für den Hersteller den Vorteil, daß nach Belieben die hydraulischen ineinander geschachtelten Antriebs- und Einspritzeinheiten, wie sie z.B. in der nachveröffentlichten DE-PS 41 42 927 beschrieben sind, durch elektromechanische ausgetauscht werden können, da die hydraulischen durch elektrische Achsen ersetzt sind. Dies unterstützt den gewünschten modularen Aufbau einer Spritzgießmaschine.

Nach Anspruch 4 werden Antriebseinheit und Einspritzeinheit als bauliche Einheit in Verbindung mit der Einspritzbrücke mit einem geringen Arbeitsaufwand in die Bohrung des Trägerblockes einfügbar. Vor der Montage können Antriebseinheit und Einspritzeinheit auf ihre Arbeitsfähigkeit überprüft werden, so daß im Betrieb des Käufers im Falle einer Störung ein Austausch äußerst einfach möglich ist. Somit lassen sich dann aber die Betriebsausfallzeiten wesentlich verkürzen. Die Motoren für die Antriebe werden soweit als möglich am Trägerblock angeordnet, so daß für die meisten Bewegungen die Motormassen weitestgehend vom Einspritzprozeß abgekoppelt sind. Dadurch lassen sich hochdynamische Einspritzprozesse verwirklichen. Aber auch bei Bewegungen befinden sich Einspritzeinheit und Antriebseinheit weitestgehend in einem gleichen Abstand, so daß die Spritzgießeinheit ihren Schwerpunkt weitestgehend in ihrem Stützbereich hält, so daß keine freitragenden Systeme entstehen, die die Antriebseinheit und die Einspritzeinheit zusätzlich belasten.

Bei einer Ausbildung nach den Ansprüchen 7 und 8 läßt sich auch bei einer elektromechanischen Antriebseinheit eine Regelung der Düsenanlagekraft erreichen.

Im folgenden wird die Erfindung anhand von in den Zeichnungen dargestellten Ausführungsbeispielen erläutert. Es zeigen:
- Fig. 1: Eine Draufsicht auf die Spritzgießeinheit,
- Fig. 2: eine Seitenansicht der Spritzgießeinheit gemäß Fig. 1,
- Fig. 3: einen vergrößerten, teilweise geschnittenen Ausschnitt der Spritzgießeinheit,
- Fig. 4: einen vergrößerten Ausschnitt im Bereich einer Führungssäule von Fig. 3,
- Fig. 5-8: Schnitte durch die Spritzgießeinheit gemäß Fig. 1 entlang den Linien 5-5, 6-6, 7-7 sowie 8-8,
- Fig. 9,10: einen Schnitt durch das Ziehkissen im entspannten und gespannten Zustand,
- Fig. 11: eine Darstellung gemäß Fig. 3 eines weiteren Ausführungsbeispiels der Spritzgießeinheit,
- Fig. 12: einen Schnitt durch die Spritzgießeinheit entlang von Linie 12-12 von Fig. 11,
- Fig. 13: eine Darstellung gemäß Fig. 8 in einem dritten Ausführungsbeispiel mit einem alternativen Antrieb für die Schneckenrotation,
- Fig. 14: eine Draufsicht auf den in Fig. 13 dargestellten Bereich.

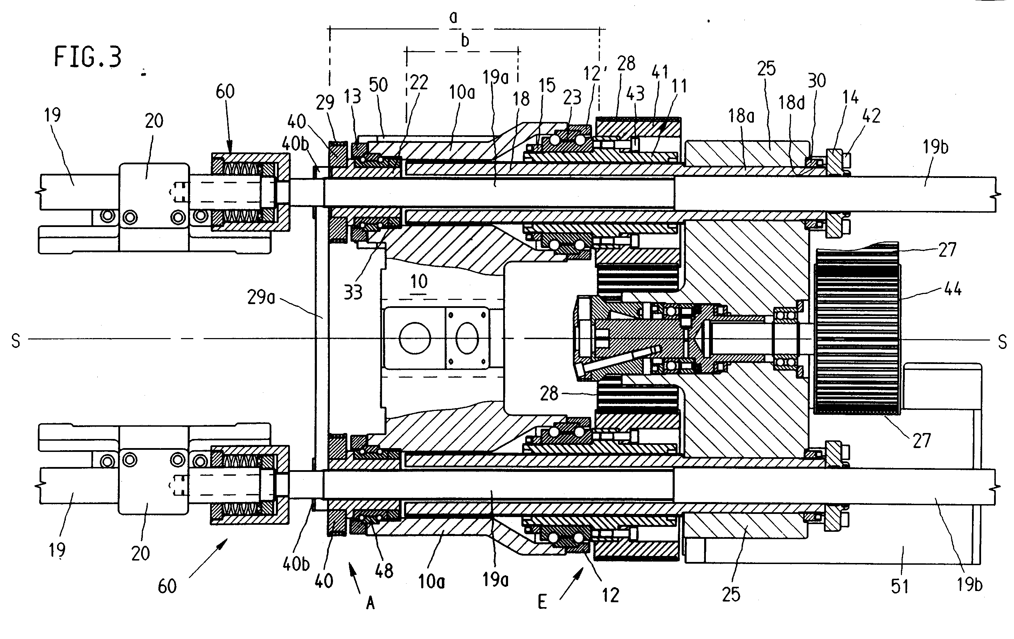

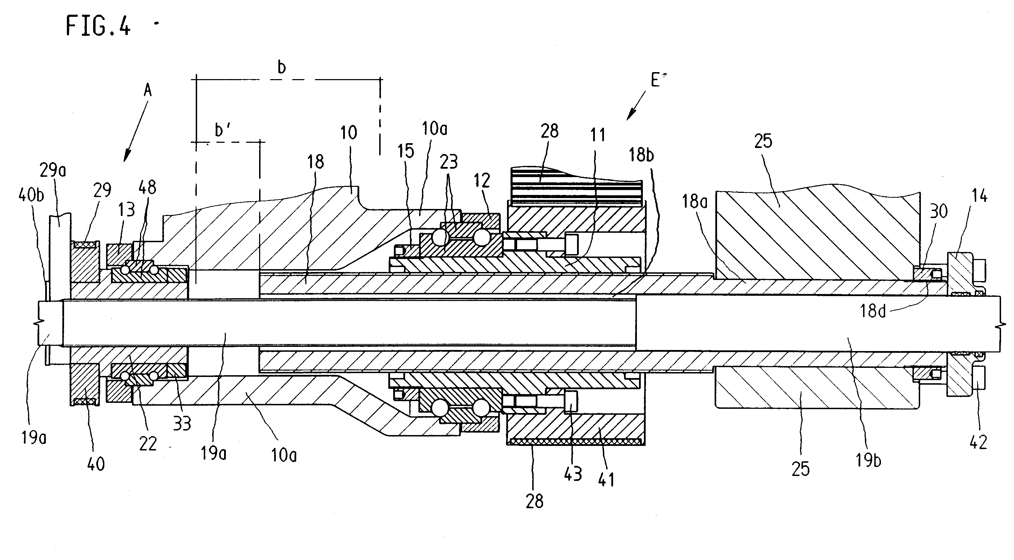

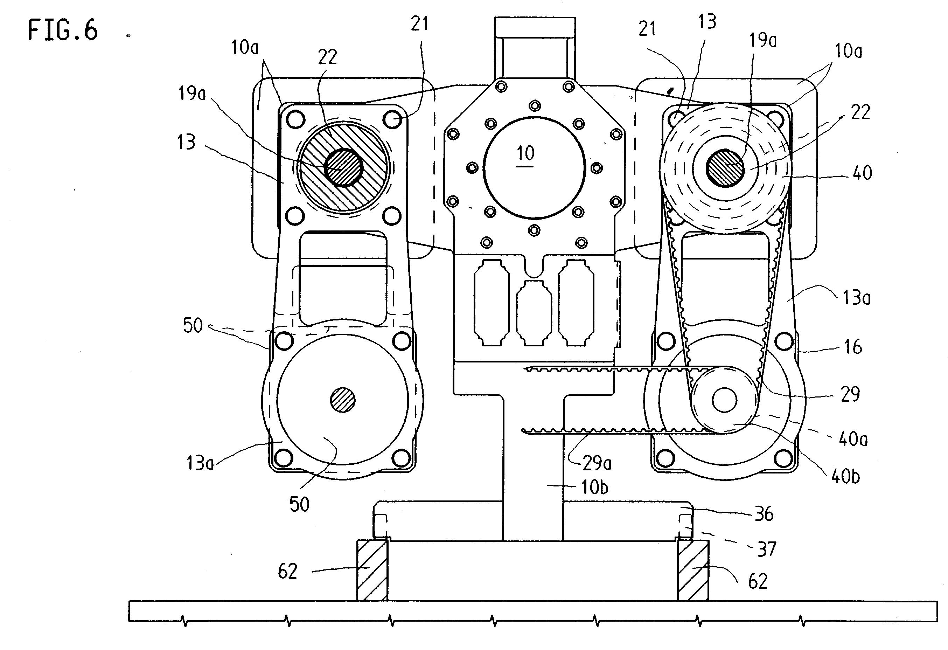

Die Spritzgießeinheit einer Kunststoff-Spritzgießmaschine besitzt einen Plastifizierzylinder 17, der von einem Trägerblock 10 aufgenommen ist. In der Spritzgießeinheit ist eine Antriebseinheit A zum axialen Verschieben der Spritzgießeinheit und eine Einspritzeinheit E zum axialen Antreiben einer im Plastifizierzylinder 17 angeordneten, rotierbaren als Fördermittel ausgebildeten Förderschnecke 72 vorgesehen. Sowohl Antriebseinheit als auch Einspritzeinheit sind elektromechanisch angetrieben und symmetrisch zur Spritzachse s-s angeordnet. Beide sind in die Spritzgießeinheit integriert. Alternativ können auch Hybridantriebe eingesetzt werden, wobei die Antriebseinheit elektromechanisch oder hydraulisch angetrieben ist, während die Einspritzeinheit E mechanisch angetrieben wird. Dadurch lassen sich die Vorteile einzelner Antriebsarten günstig miteinander koppeln. Mit der Einspritzeinheit verbunden ist eine Einspritzbrücke 25, die den Rotationsmotor 26 für die Rotation der Förderschnecke 72 oder bei einem Kolbenaggregat das Fördermittel "Kolben" trägt. Wie aus Figur 3 und 4 ersichtlich, werden für die Antriebseinheit A und die Einspritzeinheit E Spindeln vorgesehen. Die Spindeln sind in einem Flügelbereich 10a des Trägerblockes 10 angeordnet. Am formseitigen Ende des Trägerblockes sind Lagerausnehmungen vorgesehen, in denen hinter einer Spannmutter 33 ein Kugellager 48 für die Lagerung der Spindelmutter 22 der Antriebseinheit A vorgesehen ist. Die Spindelmutter 22 wird über eine Halteplatte 13 in ihrer Stellung gehalten, die durch Gewindebolzen 21 am Trägerblock befestigt ist (Fig. 6). Mit der Spindelmutter ist ein Riemenrad 40 verbunden, das von einem Motor 50 über Riemen 29,29a angetrieben wird. Die Riemen 29,29a sind dabei so angeordnet, daß eine synchrone Bewegung der beiden symmetrisch zur Spritzachse s-s angeordneten Antriebseinheiten möglich ist. An einer Anformung 13a der Halteplatte 13 ist nach Fig. 6 der Motor 50 gelagert und sind auch weitere Riemenräder 40a,40b vorgesehen. Bei Bewegung des Riementriebs rotiert die Spindelmutter 22 auf einem Spindelbereich 19a der Führungssäule. Die Führungssäule ist dabei in einer Hohlspindel 18 mit einem Führungsbereich 19b geführt. Die Führungssäulen sind an ihren Enden außerhalb der Spritzgießeinheit, beispielsweise am stationären Formträger der Formschließeinheit gelagert, so daß sich aufgrund der Rotation eine Bewegung der Spritzgießeinheit ergibt, die zum Anliegen der Düse D an der Formschließeinheit führt.

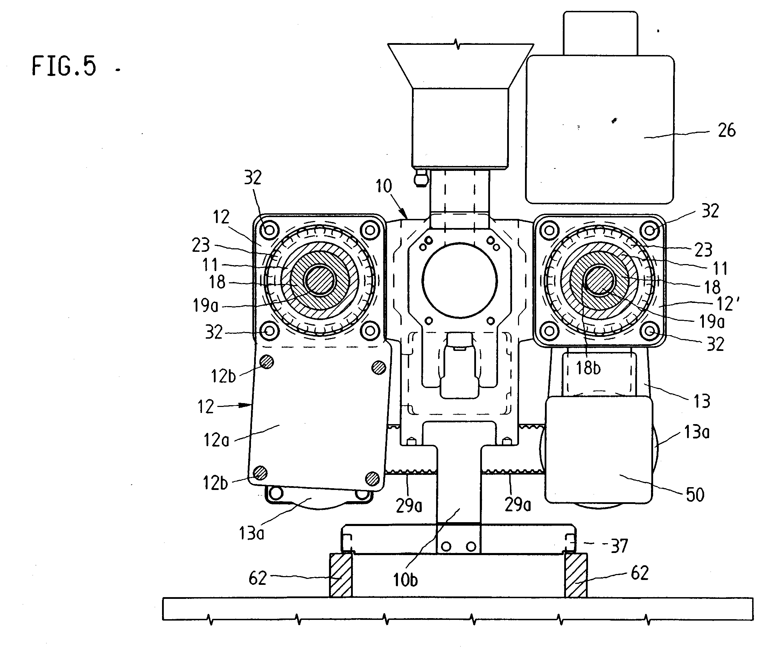

Am anderen Ende des Trägerblockes ist eine trichterförmige Ausnehmung vorgesehen, die das Kugellager 23 der Mutter 11 der Einspritzeinheit E aufnimmt. Eine Spannmutter 15 steht mit der Mutter 11 in Verbindung und mittels der Halteplatte 12,12' wird das Lager 23 in der Ausnehmung des Trägerblockes festgelegt. Die Halteplatte 12 besitzt eine Anformung 12a, in der Distanzbolzen 12b für den Motor 51 der Einspritzeinheit E festgelegt sind. Die Halteplatten 12,12' ihrerseits sind wiederum über Schrauben 32 am Trägerblock befestigt (Fig. 5).

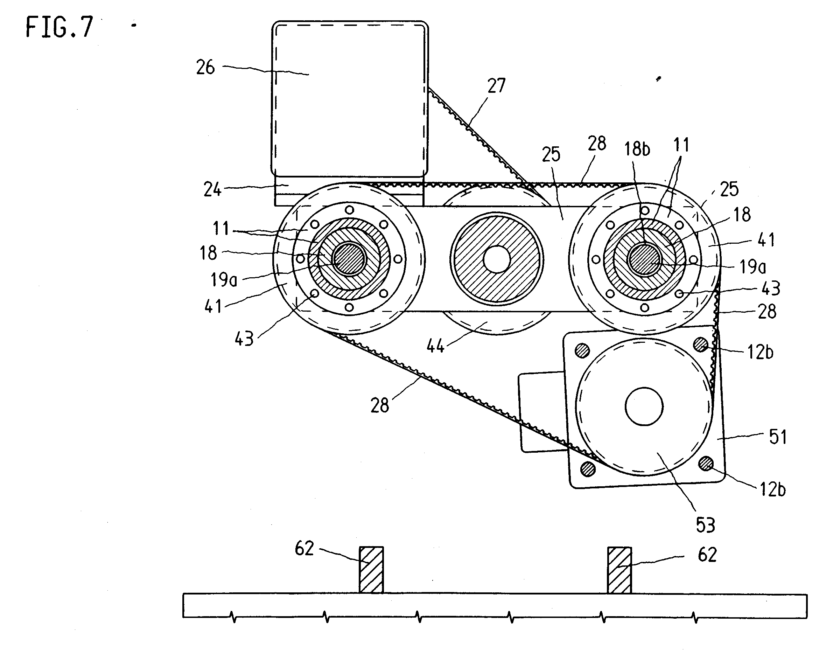

Die Mutter 11 steht mit einem Gewinde einer Hohlspindel 18 in Eingriff, die grundsätzlich über einen Verstellweg b (Fig. 4) bewegbar ist, der sich zwischen den beiden am Trägerblock angeordneten Lagerungen erstreckt. In der Darstellung von Fig. 4 verbleibt für die Bewegung somit noch ein Verstellweg b'. Die Mutter 11 ist mit einem Riemenrad 41 über Spannbolzen 43 verbunden. Das Riemenrad 41 wird vom Motor 51 der Einspritzeinheit E über das Riemenrad 53 und einen Riemen 28 angetrieben (Fig. 7), so daß sich bei Bewegung des Riemenantriebs eine synchrone Verstellung der beiden Einspritzeinheiten ergibt. Wenn die Mutter rotiert, beschreitet die Hohlspindel 18 einen Weg entlang des Verstellweges b. Dabei gleitet in ihrem Hohlraum 18b die stationäre Führungssäule 19. Im Endbereich 18a der Hohlspindel ist die Einspritzbrücke 25 über eine Spannplatte 14 befestigt, die zugleich der Führungssäule 19 als Führung dient. Die Spannplatte 14 ist dabei ihrerseits wiederum über Schrauben 42 mit der Einspritzbrücke 25 verbunden. Eine Ausrichtung der Einspritzbrücke kann über die Einstellmutter 30 erreicht werden, die in ein Außengewinde 18d der Hohlspindel eingreift.

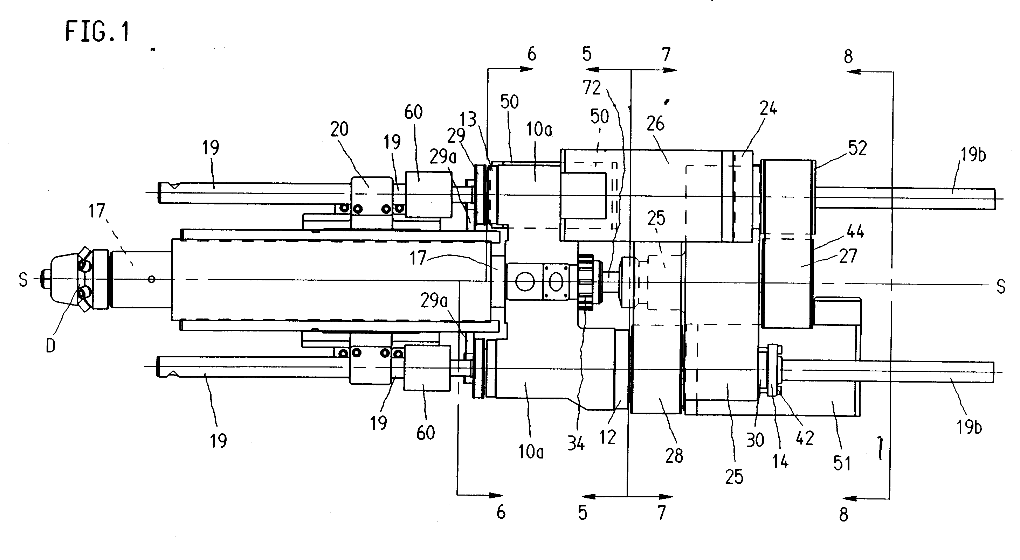

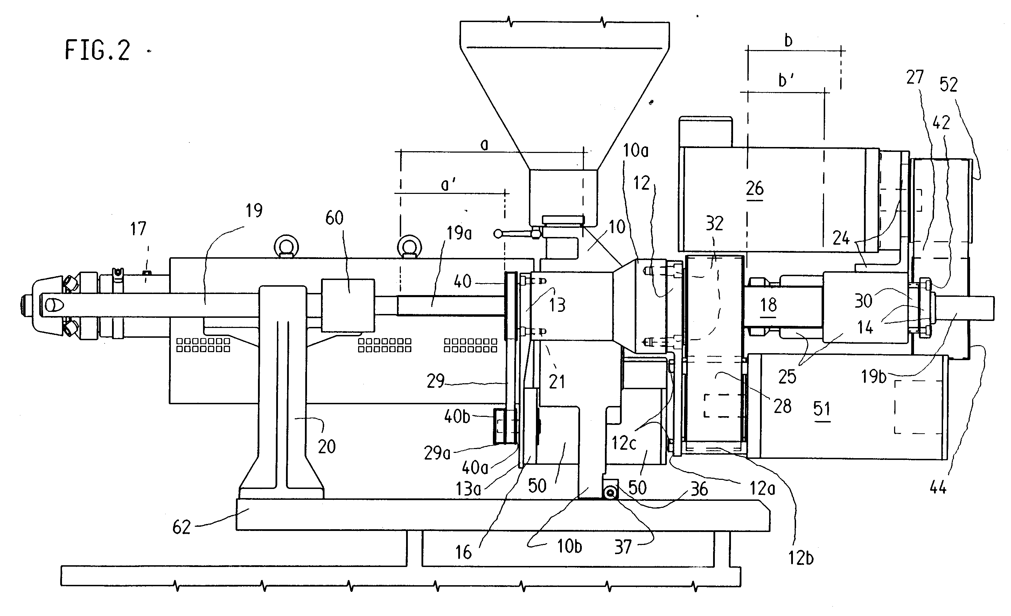

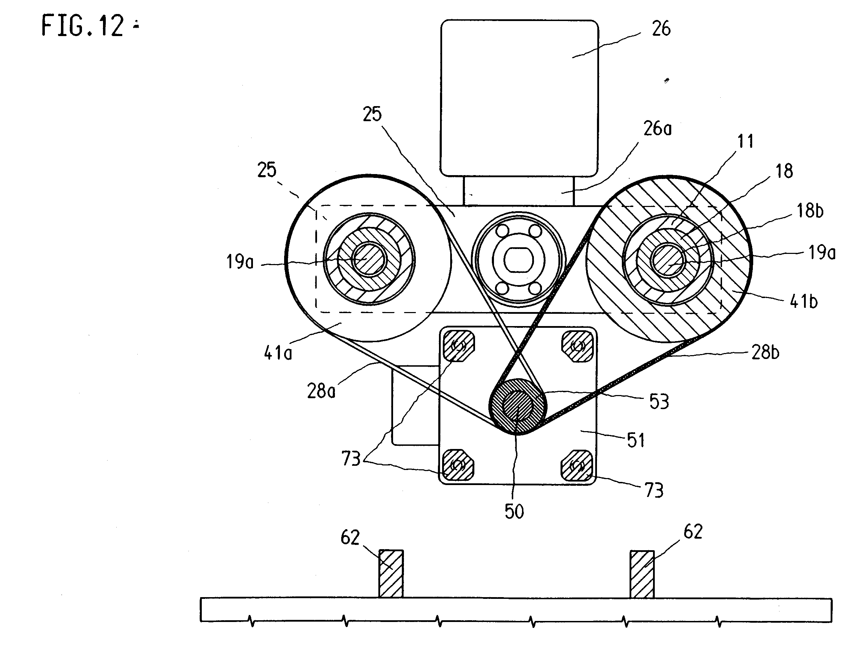

An der Einspritzbrücke ist ein Riemenrad 44 angeordnet, das über einen Riemen 27 mit dem Riemenrad 52 verbunden ist, das dem Rotationsmotor 26 zugeordnet ist und die Förderschnecke rotiert. Alternativ kann auch wie in Fig. 12 dargestellt, ein Getriebe 26a an den Rotationsmotor 26 so angeschlossen sein, daß eine Rotation auf die Förderschnecke 72 übertragbar ist. Der Rotationsmotor 26 ist über einen Haltewinkel 24 mit der Einspritzbrücke 25 verbunden, so daß er mit der Einspritzbrücke gemeinsam bewegbar ist. Über eine Keilnutverbindung kann auch dieser Motor am Trägerblock angeordnet werden, um die zu bewegenden Massen zu verringern. Der Plastifizierzylinder ist über eine Mutter 34 am Trägerblock festgelegt. Wie aus Figur 1 ersichtlich, ist jedoch hier ausreichend Platz vorhanden, um auch automatisierbare Antriebe vorzusehen, die beispielsweise am Umfang der Mutter angreifen. Aus den Figuren 2,3 und 4 ist auch zu entnehmen, welcher maximal mögliche Verfahrweg a der Antriebseinheit möglich ist, wobei der dargestellte verbleibende Weg mit a' bezeichnet ist. Mit 16 ist in Figur 6 eine Lagerplatte für die Riemenräder 40a,40b bezeichnet.

Dem Aufbau der Antriebseinheit und Einspritzeinheit gemäß Fig. 3 und 4 läßt sich auch entnehmen, daß beide als bauliche Einheit im Trägerblock 10 lediglich über die Halteplatten 12,12' und 13 festlegbar sind. Dadurch sind auch Kombinationen mechanischer und hydraulischer Einheiten E bzw. A möglich.

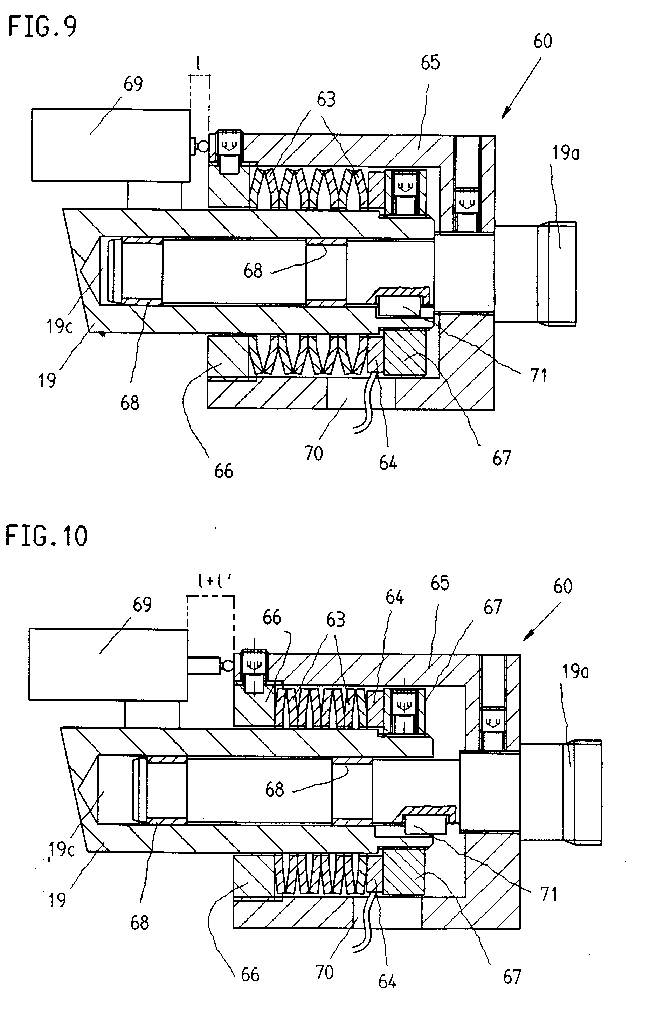

Die Figuren 9 und 10 zeigen einen Schnitt durch die in den Figuren 1 und 2 dargestellten Ziehkissen 60. Die Führungssäule ist zu diesem Zweck zweigeteilt und besitzt in ihrem vorderen Bereich eine Ausnehmung 19c. Der hintere Bereich wird durch den Spindelbereich 19a und den Führungsbereich 19b gebildet. In der Ausnehmung 19c ist dieser hintere Bereich in Gleitlagern 68 geführt. Um ein Verdrehen von hinterem und vorderem Bereich gegeneinander zu vermeiden, ist eine Drehsicherung 71 vorgesehen. Die Aufnahme 65 des Ziehkissens übergreift einen am vorderen Teil der Führungssäule 19 festgelegten Haltering 67. Die Aufnahme 65 besitzt ihrerseits wiederum einen Haltering 66. Zwischen beiden Halteringen ist ein Federpaket 63 angeordnet, das beim Anlegen der Düse gespannt wird, wie sich durch einen Vergleich der Figuren 9 und 10 ergibt. Ein Drucksensor 64 mißt den dabei entstehenden Druck und gibt seine Signale über die Ausnehmung 70 an die Steuereinheit der Spritzgießmaschine weiter. Über ein Linearpotentiometer 69 kann der der Düsenanpreßkraft entsprechende Weg l bzw. l + l' gemessen werden.

Die Spritzgießeinheit ist über die Führungssäulen 19 widergelagert, so daß die Spritzgießeinheit im übrigen frei beweglich ist. Über einen Abstützbereich 10b des Trägerblockes und über Träger 20 stützt sie sich auf einer Leiste 62 ab. Während der Axialbewegung kann sie auf dieser Leiste 62 über Abstützrollen 37 bewegt werden, die an einer Abstützleiste 36 angeordnet sind. Die Spritzgießeinheit kann dabei auf Querschienen angeordnet sein, so daß eine Querbewegung der Spritzgießeinheit leicht möglich ist. Dies wird durch die Lagerung der Führungssäulen 19, die auch beweglich ausgeführt sein kann, unterstützt, wobei die Führungssäulen auch lösbar befestigt sein können, um die Spritzgießeinheit an einem Punkt am Maschinenfuß festzulegen, der eine Rotation der Spritzgießeinheit ermöglicht, um die Förderschnecke oder das Fördermittel einer Reinigung leicht zugänglich zu machen.

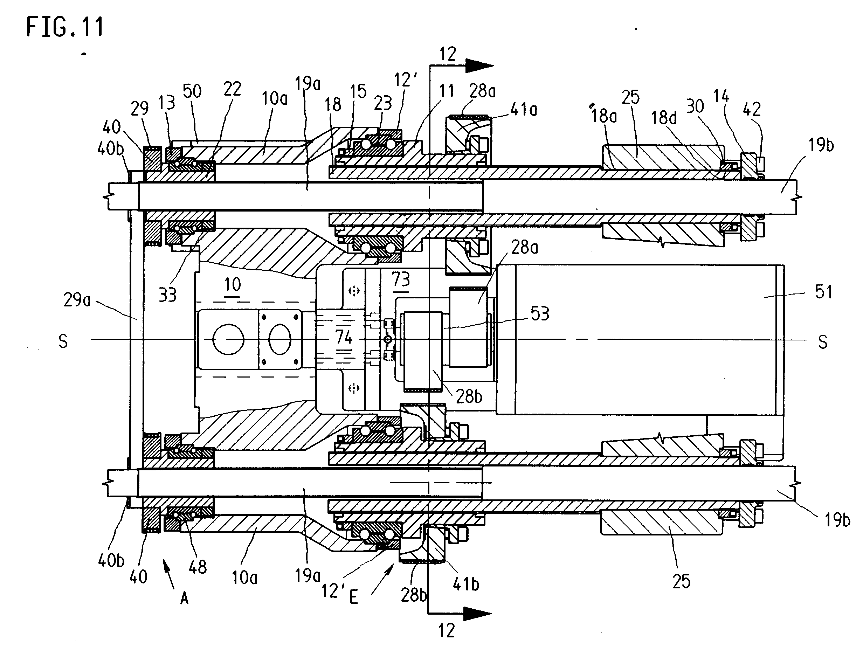

In den Fign. 11, 12 ist ein weiteres Ausführungsbeispiel dargestellt, das sich vom ersten Ausführungsbeispiel dadurch unterscheidet, daß der Antrieb der Einspritzeinheit E über zwei Riemen 28a, 28b geschieht, die über dieselbe Motorwelle des Motors 51 angetrieben sind. Der Motor 51 ist über einen Zwischenflansch 74 und einen Motorflansch 73 am Trägerblock 10 angeflanscht. Über die Riemenräder 53 der Motorwelle laufen diese beiden gegenüber dem ersten Ausführungsbeispiel schmäleren Riemen und treiben zwei schmälere Riemenscheiben 41a, 41b an. Wenngleich hier stets zwei Riemen verwendet werden, so besteht grundsätzlich die Möglichkeit, auch noch mehrere Spindeln auf diese Weise anzutreiben. Gegenüber dem ersten Ausführungsbeispiel sind somit sowohl die Riemen minimiert, da nur noch das halbe Drehmoment übertragen werden muß und auch das Zahnrad auf der Motorwelle kann kleiner gewählt werden, da aufgrund des günstigeren Umschlingungswinkels die eingreifende Mindestzähnezahl bei Verwendung eines Zahnriemens erhöht wird. Durch die Verringerung des Zahnraddurchmessers kann aber eine höhere Untersetzung bei kleinerem Bauraum möglich gemacht werden. Da zudem die Riemenscheiben 41a und 41b in der Breite reduziert sind, werden die beim Beschleunigen und Verzögern auftretenden Massenträgheitsmomente verringert. Durch eine entsprechende Anordnung des Motors für die Antriebseinheit kann ggf. auch dort ein Antrieb mit den gleichen Vorteilen verwirklicht werden.

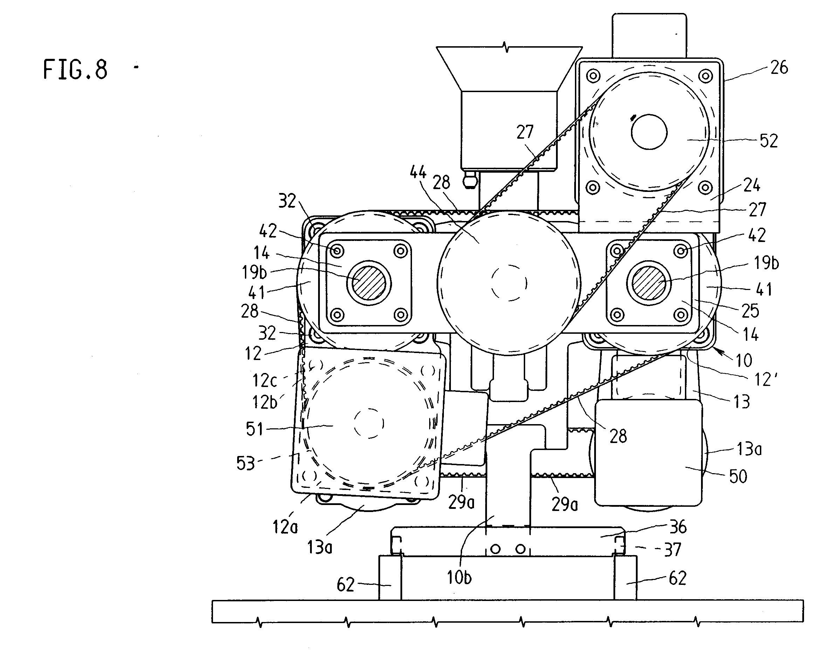

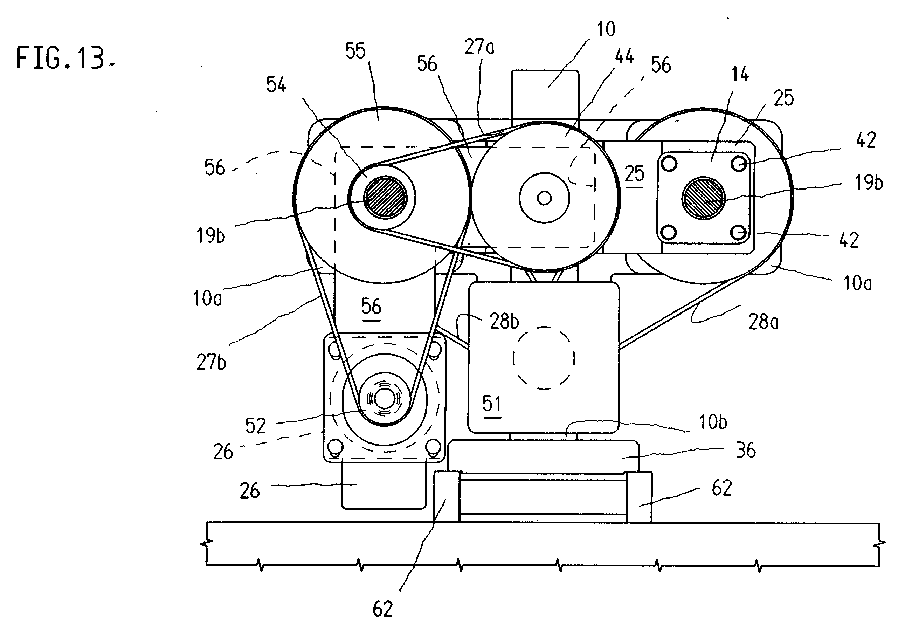

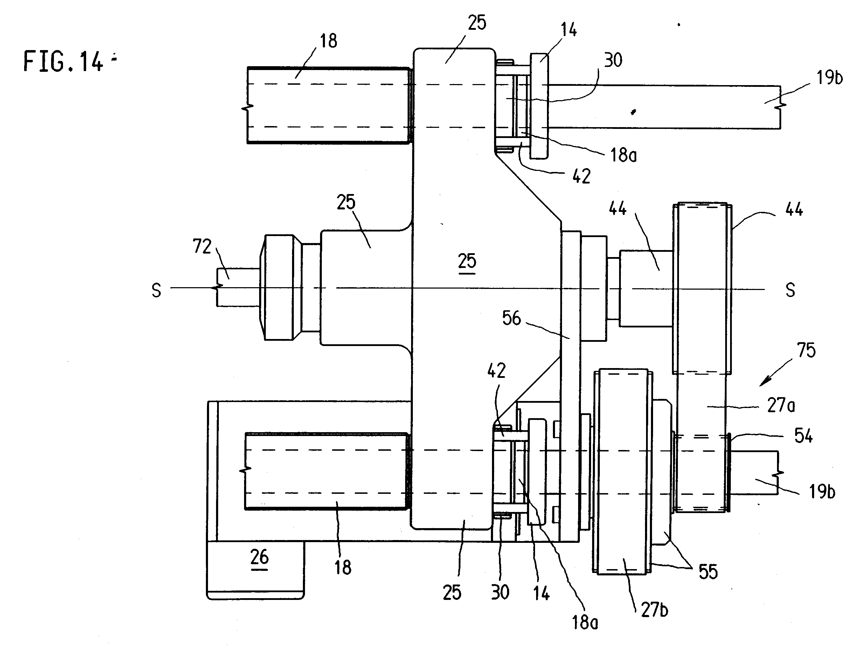

In den Figuren 13,14 ist in einem dritten Ausführungsbeispiel ein alternativer rotatorischer Schneckenantrieb dargestellt. Gegenüber Figur 8 ist hier der Antrieb 75 seitlich nach unten in einen Raum versetzt, der ohnehin durch den Aufbau der Spritzgießeinheit benötigt wird. Um an dem Motor 51 für die axiale Bewegung der Förderschnecke 72 vorbeizukommen, werden zwei Riementriebe eingesetzt, so daß von dem Riemenrad 52 über den Riemen 27b zunächst eine zweistufige Riemenradübersetzung angetrieben wird, wobei die Riemenräder 54 und 55 fest miteinander verbunden sind. Ausgehend vom Riemenrad 54 wird über den Riemen 27a das mit der Förderschnecke 72 konzentrische Riemenrad 44 angetrieben. Um eine Spannmöglichkeit für den Riemen 27a zu verwirklichen, sind die Riemenräder 54,55 über einen Exzenter an der Führungssäule 19 gelagert. Der Rotationsmotor selbst wird über eine Platte in seiner Position gehalten und kann auch dort in einem zeichnerisch nicht dargestellten Langloch zur Spannung des Riemens 27b verschoben werden. Die Riemenräder 54,55 stellen eine Übersetzung dar, so daß als Rotationsmotor ein kleinerer Motor mit höherer Drehzahl eingesetzt werden kann. Durch die Anordnung des Motors in einem ohnehin für den Betrieb der Spritzgießmaschine benötigten Raum ergibt sich eine kompaktere Bauweise und gegenüber dem Ausführungsbeispiel der Figuren 11 und 12 kann der Einsatz eines teuren Getriebes vermieden werden.

## Patentansprüche

1. Spritzgießeinheit für eine Kunststoff-Spritzgießmaschine mit einem den Plastifizierzylinder (17) aufnehmenden Trägerblock (10), einer Antriebseinheit (A) zum axialen Verschieben der Spritzgießeinheit in Richtung der Spritzachse (s-s) und mit einer symmetrisch zur Spritzachse angeordneten mechanischen Einspritzeinheit (E) zum axialen Antreiben eines im Plastifizierzylinder (17) angeordneten Fördermittels (72) sowie mit einer mit der Einspritzeinheit verbundenen Einspritzbrücke (25),
dadurch gekennzeichnet, daß die Antriebseinheit (A) ebenfalls symmetrisch zur Spritzachse (s-s) angreift und in die Spritzgießeinheit integriert ist und daß wenigstens eine elektromechanisch angetriebene Spindel der Einspritzeinheit (E) als Hohlspindel (18) ausgebildet ist, in der Führungselemente geführt sind, deren Enden außerhalb der Spritzgießeinheit als Widerlager für das axiale Verschieben der Spritzgießeinheit festlegbar sind.

2. Spritzgießeinheit nach Anspruch 1, dadurch gekennzeichnet, daß elektromechanisch angetriebene Spindeln der Antriebseinheit (A) durch einen Spindelbereich (19a) der als Führungselemente ausgebildeten Führungssäulen (19) gebildet sind.

3. Spritzgießeinheit nach einem der vorhergehenden Ansprüche, dadurch gekennzeichnet, daß die Einspritzbrücke (25) an einem Endbereich (18a) geringeren Durchmessers der Hohlspindel (18) über eine Einstellmutter (30) einstellbar und über eine von an der Einspritzbrücke (25) abgestützten Schrauben (42) durchgriffene Spannplatte (14) festlegbar ist.

4. Spritzgießeinheit nach einem der vorhergehenden Ansprüche, dadurch gekennzeichnet, daß Antriebseinheit (A) und Einspritzeinheit (E) als bauliche Einheit im Trägerblock (10) über Halteplatten (12,13) festlegbar sind.

5. Spritzgießeinheit nach einem der vorhergehenden Ansprüche, dadurch gekennzeichnet, daß ein Motor (51) für die axiale Schneckenbewegung am Trägerblock (10) angeordnet ist und über wenigstens einen Riemen (28) wenigstens ein Riemenrad (41) antreibt, dessen Rotation, auf die im Trägerblock (10) drehbar gelagerte Mutter (11) übertragen, die Spindel (18) der Einspritzeinheit (E) axial bewegt.

6. Spritzgießeinheit nach einem der vorhergehenden Ansprüche, dadurch gekennzeichnet, daß ein Antrieb (75) für die Rotation der Förderschnecke (72) im Bereich neben dem Motor (51) angeordnet ist und über einen Riemen (27a,27b) die Förderschnecke (72) rotiert, wobei ein Übersetzungsriemenrad (54,55) an der Führungssäule (19) exzentrisch gelagert ist.

7. Spritzgießeinheit nach einem der vorhergehenden Ansprüche, dadurch gekennzeichnet, daß die Antriebseinheit (A) in Ziehkissen (60) axial beweglich gegen die Kraft von Federn zur Erzeugung der Düsenanpreßkraft gelagert ist.

8. Spritzgießeinheit nach Anspruch 7, dadurch gekennzeichnet, daß das Ziehkissen an der Führungssäule (19) angeordnet ist, die eine Ausnehmung (19c) aufweist, in der ein Endbereich des den Spindelbereich (19a) und den Führungsbereich (19b) umfassenden hinteren Teil der Führungssäule (19) axial beweglich gegen die Kraft von Federn (63) gelagert ist.

## Claims

1. Injection moulding unit for a plastics material injection moulding machine including a carrier block (10) accommodating the plasticising cylinder (17), a driving unit (A) for the axial displacement of the injection moulding unit in the direction of the injection axis (s-s) and including a mechanical injection unit (E) disposed symmetrically relative to the injection axis for the axial driving of a conveying means (72) disposed in the plasticising cylinder (17) and including an injection bridge (25) connected to the injection unit,
characterised in that the driving unit (A) also acts symmetrically relative to the injection axis (s-s) and is integrated in the injection moulding unit and that at least one electro-mechanically driven spindle of the injection unit (E) is configured as a hollow spindle (18), in which guide elements are guided, the ends of which are securable outside the injection moulding unit as an abutment for the axial displacement of the injection moulding unit.

2. Injection moulding unit in accordance with claim 1, characterised in that electro-mechanically driven spindles of the driving unit (A) are formed by a spindle region (19a) of the guide columns (19) which are configured as guide elements.

3. Injection moulding unit in accordance with one of the preceding claims, characterised in that the injection bridge (25) is adjustable in a small diameter end region (18a) of the hollow spindle (18) via an adjusting nut (30) and is securable via a clamping plate (14) penetrated by screws (42) supported at the injection bridge (25).

4. Injection moulding unit in accordance with one of the preceding claims, characterised in that driving unit (A) and injection unit (E) are securable as a structural unit in the carrier block (10) via retaining plates (12, 13).

5. Injection moulding unit in accordance with one of the preceding claims, characterised in that a motor (51) is disposed on the carrier block (10) for the axial movement of the screw and drives at least one belt pulley (41) via at least one belt (28), the rotation of the latter: transmitted to the nuts (11) that are rotatably mounted in the carrier block (10), moves the spindle (18) of the injection unit (E) in an axial manner.

6. Injection moulding unit in accordance with one of the preceding claims, characterised in that a driving means (75) is disposed in the region near the motor (51) for the rotation of the feed screw (72) and rotates the feed screw (72) via a belt (27a, 27b), a speed-transforming belt pulley (54, 55) being mounted eccentrically on the guide column (19).

7. Injection moulding unit in accordance with one of the preceding claims, characterised in that the driving unit (A) is mounted so as to be axially displaceable in die cushions (60) against the force of springs for the generation of the nozzle contact pressure.

8. Injection moulding unit in accordance with claim 7, characterised in that the die cushion is disposed at the guide column (19), which has a recess (19c), in which an end region of the rear part of the guide column (19), encompassing the spindle area (19a) and the guiding area (19 b) is mounted so as to be axially displaceable against the force of springs (63).

## Revendications

1. Unité d'injection pour une machine d'injection de matière plastique comprenant un bloc de support (10) recevant un cylindre de plastification (17), une unité de déplacement (A) pour déplacer axialement l'unité d'injection dans la direction de l'axe d'injection (s-s) et avec une unité d'injection (E) mécanique agencée symétriquement par rapport à l'axe d'injection pour déplacer dans le sens axial un moyen d'alimentation (72) agencé dans le cylindre de plastification (17), ainsi qu'un pont d'injection (25) relié à l'unité d'injection,
caractérisée
en ce que l'unité de déplacement (A) est également agencée symétriquement à l'axe d'injection (s-s) et est intégrée dans l'unité d'injection,
et en ce qu'au moins une vis sans fin entraînée électromécaniquement de l'unité d'injection (E) est réalisée sous la forme d'un arbre creux (18) à l'intérieur duquel s'étendent les éléments de guidage dont les extrémités en dehors de l'unité d'injection sont établies en tant que butées pour le déplacement axial de l'unité d'injection.

2. Unité d'injection selon la revendication 1, caractérisée en ce que la vis sans fin entraînée électromécaniquement de l'unité de déplacement (A) est réalisée sous la forme d'une zone filetée (19a) d'une colonne de guidage (19) agencée en tant qu'élément de guidage.

3. Unité d'injection selon l'une des revendications précédentes, caractérisée en ce que le pont d'injection (25) peut être installé en une zone d'extrémité (18a) de diamètre réduit de l'arbre creux (18) au moyen d'un écrou d'ajustage (30), et peut être fixé au moyen d'une plaque de serrage (14) engagée par des boulons (42) traversants en prise avec le pont d'injection (25).

4. Unité d'injection selon l'une des revendications précédentes, caractérisée en ce que l'unité de déplacement (A) et l'unité d'injection (E) sont fixées en tant qu'unités constructives par des plaques de retenue (12,13) sur le bloc de support (10).

5. Unité d'injection selon l'une des revendications précédentes, caractérisée en ce qu'un moteur (51) pour le déplacement axial de la vis transporteuse est agencé sur le bloc de support (10) et entraîne au moins une roue crantée (41) et au moins une courroie (28) dont la rotation transmise à un écrou (11) monté mobile en rotation sur le bloc de support (10) déplace axialement l'arbre (18) de l'unité d'injection (E).

6. Unité d'injection selon l'une des revendications précédentes, caractérisée en ce que l'entraînement (75) pour la rotation de la vis sans fin transporteuse (72) est agencé à proximité du moteur (51) et entraîne la vis transporteuse (72) au moyen de courroies (27a,27b) par lesquelles des roues crantées de transmission (54,55) sont installées de manière excentrée sur les colonnes de guidage (19).

7. Unité d'injection selon l'une des revendications précédentes, caractérisée en ce que l'unité de déplacement (A) est montée mobile axialement dans des boîtes de traction (60) contre la force de ressort pour générer la force de pression des injecteurs.

8. Unité d'injection selon la revendication 7, caractérisée en ce que les boîtes de traction sont agencées sur la colonne de guidage (19) et présentent une cavité (19c) dans laquelle l'extrémité de la partie arrière de la colonne de guidage (19) comprenant la zone de vis sans fin (19a) et la zone de guidage (19b) est mobile axialement à l'encontre de la force de ressort (63).
